(19) Europäisches Patentamt
European Patent Office
Office européen des brevets

(11) **EP 4 459 498 A1**

(12) **EUROPEAN PATENT APPLICATION**
published in accordance with Art. 153(4) EPC

(43) Date of publication:
**06.11.2024 Bulletin 2024/45**

(21) Application number: **22915129.5**

(22) Date of filing: **29.12.2022**

(51) International Patent Classification (IPC):
**G06F 30/27** (2020.01)

(52) Cooperative Patent Classification (CPC):
**G06F 30/27;** G06F 2119/02

(86) International application number:
**PCT/CN2022/143672**

(87) International publication number:
**WO 2023/125880 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021 CN 202111662864**

(71) Applicant: **VIVO MOBILE COMMUNICATION CO., LTD.**
**Dongguan, Guangdong 523863 (CN)**

(72) Inventors:
• **JIA, Chenglu**
  **Dongguan, Guangdong 523863 (CN)**
• **YANG, Ang**
  **Dongguan, Guangdong 523863 (CN)**
• **SUN, Peng**
  **Dongguan, Guangdong 523863 (CN)**

(74) Representative: **Murgitroyd & Company**
**165-169 Scotland Street**
**Glasgow G5 8PL (GB)**

(54) **MODEL CONSTRUCTION METHOD AND APPARATUS, AND COMMUNICATION DEVICE**

(57) A model construction method and apparatus, and a communication device, which belongs to the field of wireless communications. The construction method includes: obtaining, by a first communication device, configuration information of a time series prediction model from a second communication device, where the time series prediction model is used for predicting information related to a time series; and constructing, by the first communication device, the time series prediction model based on the configuration information.

200

FIG. 2

**Description**

**CROSS-REFERENCE TO RELATED APPLICATIONS**

This application claims priority to Chinese Patent Application No.202111662864.6 filed on December 30, 2021, which is incorporated herein by reference in its entirety.

**TECHNICAL FIELD**

This application belongs to the technical field of wireless communications, and specifically relates to a model construction method and apparatus, and a communication device.

**BACKGROUND**

Because of the rapid growth of mobile devices and mobile data traffic, as well as the emergence of a large number of application scenarios, future wireless communication networks are likely to have a wide range of indicator requirements such as high speed, low delay, and enhanced mobility. For example, for the enhanced mobility, in various high mobility scenarios such as Non Terrestrial Networks (NTN) or high speed railways, due to rapid changes in surrounding scattering environments, the coherence time of a wireless channel is seriously shortened. That is to say, detection results of a wireless communication device and a network-side base station for the wireless channel may fail rapidly, so that more frequent wireless channel detection must be performed to maintain good communication performance, which poses a great challenge to the load and energy consumption of a network.

Time series prediction is a method for a terminal and a network-side device to predict future communication measurements based on the observation of communication measurements over a past period of time, which is essentially to excavate temporal correlation between the measurements based on data of historical measurements. However, since in practical applications, terminals are of various types, have different capabilities, and may have different requirements, how to construct a model for predicting time series-related information so that both communication parties can understand each other consistently is a technical problem required to be solved nowadays.

**SUMMARY**

Embodiments of this application provide a model construction method and apparatus, and a communication device, which can solve the problem of how to construct a model for predicting time series-related information so that both communication parties can understand each other consistently.

A first aspect provides a model construction method, including: obtaining, by a first communication device, configuration information of a time series prediction model from a second communication device, where the time series prediction model is used for predicting information related to a time series; and constructing the time series prediction model based on the configuration information.

A second aspect provides a model construction apparatus, including an obtaining module and an application module. The obtaining module is configured to obtain configuration information of a time series prediction model from a second communication device. The time series prediction model is used for predicting information related to a time series. The application module is configured to construct the time series prediction model based on the configuration information.

A third aspect provides a prediction information obtaining method, including: configuring, by a second communication device, configuration information of a time series prediction model for a first communication device, where the time series prediction model is used for predicting information related to a time series; and receiving, by the first communication device, target prediction information reported by the first communication device, where the target prediction information is prediction information that is obtained by the first communication device using the time series prediction model to predict first information.

A fourth aspect provides a prediction information obtaining apparatus, including a configuration module and a receiving module. The configuration module is used for a second communication device to configure configuration information of a time series prediction model for a first communication device. The time series prediction model is used for predicting information related to a time series. The receiving module is configured to receive target prediction information reported by the first communication device. The target prediction information is prediction information that is obtained by the first communication device using the time series prediction model to predict first information.

A fifth aspect provides a communication device. The terminal includes a processor and a memory. The memory stores a program or instruction executable on the processor. The program or instruction, when being executed by the processor, implements steps of the method as described in the first aspect, or steps of the method as described in the third aspect.

A sixth aspect provides a communication device, including a processor and a communication interface. The processor is configured to implement steps of the method as described in the first aspect, or steps of the method as described in the first aspect. The communication interface is configured to communicate with an external device.

A seventh aspect provides a model configuration system, including a first communication device and a second communication device. The first communication device may be configured to execute steps of the method as described in the first aspect. The second communication device may be configured to execute steps of the method as described in the third aspect.

An eighth aspect provides a readable storage medium. The readable storage medium stores a program or instruction. The program or instruction, when being executed by a processor, implements steps of the method as described in the first aspect, or steps of the method as described in the third aspect.

A ninth aspect provides a chip. The chip includes a processor and a communication interface. The communication interface is coupled with the processor. The processor is configured to run a program or instruction to implement steps of the method as described in the first aspect, or steps of the method as described in the third aspect.

A tenth aspect provides a computer program/program product. The computer program/program product is stored in a storage medium. The computer program/program product is executed by at least one processor to implement steps of the method as described in the first aspect, or steps of the method as described in the third aspect.

In the embodiments of this application, the first communication device obtains, from the second communication device, the configuration information of the time series prediction model for predicting the information related to the time series, and constructs the time series prediction model based on the configuration information, so that the first communication device may predict the information related to the time series through the time series prediction model, thereby solving the problem of how to configure the model for predicting time series-related information so that both communication parties can understand each other consistently.

## BRIEF DESCRIPTION OF THE DRAWINGS

FIG. 1 is a block diagram of a wireless communication system to which the embodiments of this application are applicable;

FIG. 2 is a schematic flow chart of a model construction method according to an embodiment of this application;

FIG. 3 is a schematic flow chart of a prediction information obtaining method according to an embodiment of this application;

FIG. 4 is another schematic flow chart of a model construction method according to an embodiment of this application;

FIG. 5 is a schematic diagram of a training window and sampling of training samples according to an embodiment of this application;

FIG. 6 is a schematic structural diagram of a model construction apparatus according to an embodiment of this application;

FIG. 7 is a schematic structural diagram of a prediction information obtaining apparatus according to an embodiment of this application;

FIG. 8 is a schematic structural diagram of a communication device according to an embodiment of this application;

FIG. 9 is a schematic diagram of a hardware structure of a terminal according to an embodiment of this application; and

FIG. 10 is a schematic diagram of a hardware structure of a network-side device according to an embodiment of this application.

## DETAILED DESCRIPTION

The technical solutions in the embodiments of this application will be clearly described below with reference to the drawings in the embodiments of this application. It is apparent that the described embodiments are only part of the embodiments of this application, not all the embodiments. All other embodiments obtained by persons skilled in the art based on the embodiments of this application fall within the protection scope of this application.

The specification and claims of this application, and terms "first" and "second" are used to distinguish similar objects, but are unnecessarily used to describe a specific sequence or order. It is to be understood that terms used in this way are exchangeable in a proper case, so that the embodiments of this application can be implemented in an order other than those shown or described herein, and that the objects distinguished by "first" and "second" are generally of one kind and do not limit the number of objects, e.g., the first object may be one or more than one. In addition, "and/or" used in this specification and the claims represents at least one of the connected objects, and the character "/" generally indicates that the connected objects are in an "or" relationship.

It is to be noted that, the technologies described in this application are not limited to a Long Term Evolution (Long Term Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" are often used interchangeably in embodiments of this application, and the techniques described may be used for the systems and radio techniques mentioned above, as well as for other systems and radio techniques. The following description describes New Radio (NR) systems for exemplary purposes and uses NR terms throughout most of the following description, but these techniques may also be applied to applications other than NR system applications, such as $6^{th}$ Generation ($6^{th}$ Generation, 6G) communication systems.

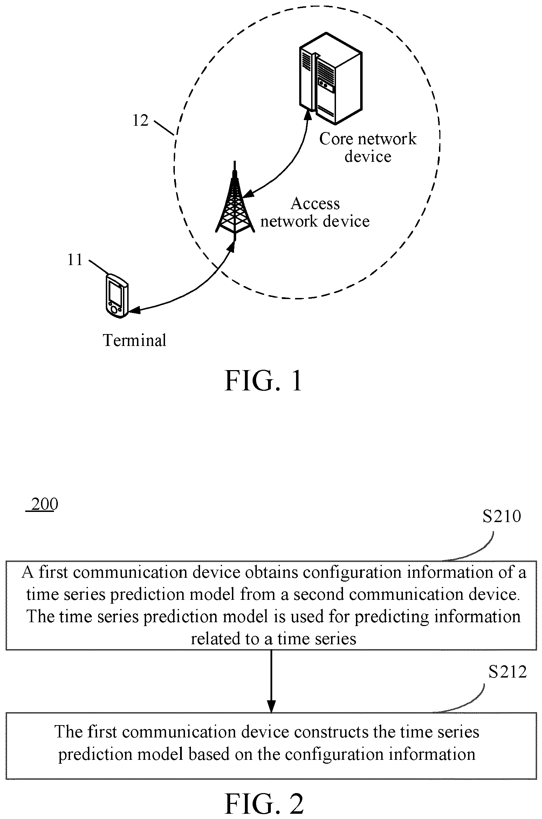

FIG. 1 is a block diagram of a wireless communication system to which the embodiments of this application are applicable. The wireless communication system includes a terminal 11 and a network-side device 12. The terminal 11 may be terminal-side device such as a mobile phone, a tablet personal computer (Tablet Personal Computer), a laptop computer (Laptop Computer) or known as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (VUE), a pedestrian user equipment (PUE), smart home (home device having a wireless communication function, such as a refrigerator, a television, a washing machine, furniture, or the like), a games console, a personal computer (personal computer, PC), an automatic teller machine, or a self-service machine, etc. A wearable device includes: a smart watch, a smart wristband, smart headphones, smart glasses, smart jewelry (a smart bracelet, a chain bracelet, a smart ring, a smart necklace, a smart anklet, a smart ankle chain, etc.), a smart wrist strap, smart clothing, etc. It is to be noted that, the specific type of the terminal 11 is not limited in the embodiments of this application. The network-side device 12 may include an access network device and/or a core network device. The network-side device 12 may also be known as a radio access network device, a radio access network (Radio Access Network, RAN), a radio access network function, or a radio access network unit. The access network device 12 may include a base station, a WLAN access point or a WiFi node, etc. The base station may be referred to as a Node B, an evolved Node B (eNB), an access point, a Base Transceiver Station (Base Transceiver Station, BTS), a radio base station, a radio transceiver, a Basic Service Set (Basic Service Set, BSS), an Extended Service Set (Extended Service Set, ESS), a household B node, a household evolved B node, a Transmission Reception Point (Transmission Reception Point, TRP), or other some other appropriate term in the art, as long as the same technical effect is achieved. The base station is not limited to specific technical terms. It is to be noted that, only a base station in an NR system is used as an example in the embodiments of this application, and a specific type of the base station is not limited.

A model configuration solution provided in the embodiments of this application is described in detail below through some embodiments and application scenarios thereof, with reference to the drawings.

FIG. 2 is a schematic flow chart of a model construction method according to an embodiment of this application. As shown in FIG. 2, the method 200 mainly includes the following steps.

S210, a first communication device obtains configuration information of a time series prediction model from a second communication device. The time series prediction model is used for predicting information related to a time series.

In this embodiment of this application, the first communication device and the second communication device may respectively be two ends in wireless communication. For example, the first communication device is a terminal, and the second communication device is a network-side device. Alternatively, the first communication device is a remote (Remote) terminal, and the second communication device is a relay (Relay) terminal. Alternatively, the first communication device and the second communication device may also be other communication devices, and are not specifically limited in this embodiment of this application.

The network-side device includes, but is not limited to, at least one of the following:

a) a core network node, including NWDAF, LMF, etc., or a neural network processing node; or

b) an access network node, including a base station or a newly-defined neural network processing node.

In this embodiment of this application, first information of the time series prediction model is information related to a time series. For example, the first information may be one or more pieces of the information related to the time series such as Channel State Information (Channel State Information, CSI), position information of the first communication device, beam information of the first communication device, etc.

In a possible implementation, the second communication device may actively send the configuration information to the first communication device. For example, the second communication device actively sends the configuration information to the first communication device according to an application scenario where the first communication device is currently located, so as to instruct the first communication device to deploy the time series prediction model to predict the first information.

In another possible implementation, the second communication device may also send the configuration information to the first communication device based on a request of the first communication device. Therefore, in this possible implementation, before the first communication device obtains the configuration information of the time series prediction model from the second communication device, the method further includes: the first communication device sending model configuration request information to the second communication device. For example, the first communication device sends the model configuration request information to the second communication device according to capabilities of the first communication device, to request the second communication device to configure the configuration information for the first communication device.

S212, the first communication device constructs the time series prediction model based on the configuration information.

In this embodiment of this application, the first communication device constructs the time series prediction model according to the configuration information, so that the constructed time series prediction model may be used to predict the first information to reduce measurement of communication measurements.

In this embodiment of this application, the first communication device obtains, from the second communication device, the configuration information of the time series prediction model for predicting the information related to the time series, and constructs the time series prediction model based on the configuration information, so that the first communication device may predict the information related to the time series through the time series prediction model. Therefore, the problem of how to construct a model for predicting time series-related information so that both communication parties can understand each other consistently is solved. Moreover, since the prediction information obtained by the first communication device using the time series prediction model for prediction needs to be fed back to the second communication device, in a way that the second communication device configures the configuration information of the time series prediction model, the second communication device can learn the configuration information of the time series prediction model corresponding to the received prediction information, facilitating the use of the prediction information by the second communication device. Moreover, if the first communication device is a terminal, since the capability of each terminal is different, in the way that the second communication device configures the configuration information of the time series prediction model, a suitable time series prediction model may be configured for each terminal.

In a possible implementation, the time series prediction model may be a Gaussian Process (Gaussian Process, GP) model.

The GP model is a machine learning method that is developed based on a statistical learning theory and a bayes theory, can process complex regression and classification problems with high dimensionality, small samples and nonlinearity, and thus has a strong generalization capability. Compared with methods such as a neural network, GP has the advantages of easy implementation, adaptive obtaining of hyper-parameters, flexible nonparametric inference, interpretability, and probabilistically meaningful outputs, and has the potential to solve the problem of complex time series prediction of future wireless communication systems.

For example, a standard linear model is assumed as follows:

$$ \mathbf{y} = \mathbf{x}^T \mathbf{w} + \epsilon = \mathrm{f}(\mathbf{x}) + \epsilon $$

$\varepsilon$ obeys a mean which is 0, and variance is $\sigma_n^2$ Gaussian distribution: $\epsilon \sim N(0,\ \sigma_n^2)$

Without considering noise for the time being, the GP model estimates a parameter w by observing a finite sample <x, y>, where x is an input of the GP model, and y is a GP model label. According to a maximum likelihood estimation theory, likelihood probability is shown as follows:

$$ p(\mathbf{y}|X, \mathbf{w}) = \prod_{i=1}^{n} p(y_i|\mathbf{x}_i, \mathbf{w}) = \prod_{i=1}^{n} \frac{1}{\sqrt{2\pi}\sigma_n} \exp\left(-\frac{(y_i - \mathbf{x}_i^\top \mathbf{w})^2}{2\sigma_n^2}\right) $$

$$ = \frac{1}{(2\pi\sigma_n^2)^{n/2}} \exp\left(-\frac{1}{2\sigma_n^2}|\mathbf{y} - X^\top \mathbf{w}|^2\right) = \mathcal{N}(X^\top \mathbf{w}, \sigma_n^2 I) $$

According to the Bayes's theorem, prior information (prior knowledge of the parameter w before x, y is observed) about the parameter w needs to be defined. Assuming that w obeys a mean which is 0, and a covariance matrix is a Gaussian distribution for $\Sigma_\mathrm{p}$ :

$$w \sim N(0, \Sigma_p);$$

the GP model is a supervised machine learning method, and uses maximum posterior probability criterion to infer model parameters based on observation of the input X and an output y:

$$p(w|y, X) = \frac{p(y|X, w)p(w)}{p(y|X)};$$

marginal probability is independent of the parameter w, and is a normalized constant:

$$p(w|y, X) = \int p(y|X, w)p(w)dw;$$

further:

$$p(w|X, y) \propto \exp\left(-\frac{1}{2\sigma_n^2}(y - X^T w)^T(y - X^T w)\right)\exp\left(-\frac{1}{2}w^T \sum_{P}^{-1} w\right)$$

$$\propto \exp\left(-\frac{1}{2}(w - \overline{w})^T(\frac{1}{\sigma_n^2}XX^T + \sum_{P}^{-1})(w - \overline{w})\right)$$

where

$$\overline{w} = \sigma_n^{-2}(\sigma_n^{-2}XX^T + \Sigma_p^{-1})^{-1}Xy;$$

maximum posteriori probability of the parameter w is further obtained:

$$p(w|X, y) \sim N(\overline{w} = \frac{1}{\sigma_n^2}A^{-1}Xy, A^{-1});$$

where

$$A = \sigma_n^{-2}XX^T + \Sigma_p^{-1} \;;$$

the GP model takes the possibility of all ws into consideration, a weighted average of all possible linear model combinations is taken, the output posterior distribution also obeys the Gaussian distribution, and the mean is used as a predicted value:

$$p(f_*|\mathbf{x}_*, X, \mathbf{y}) = \int p(f_*|\mathbf{x}_*, \mathbf{w})p(\mathbf{w}|X, \mathbf{y})\, d\mathbf{w}$$

$$= \mathcal{N}\left(\frac{1}{\sigma_n^2}\mathbf{x}_*^\top A^{-1}X\mathbf{y}, \; \mathbf{x}_*^\top A^{-1}\mathbf{x}_*\right);$$

the predicted value: $f_* = \frac{1}{\sigma_n^2}\mathbf{A}\mathbf{x}_*^{T-1}\mathbf{X}\mathbf{y}$. It can be seen that the predicted value is the maximum likelihood estimate of a test input $\mathbf{x}_*$ multiplied by the weight parameter w, i.e., the maximum likelihood estimate (noise free) of $\mathbf{x}_*^T w$.

Prediction uncertainty (variance): $\mathbf{x}_*^T \mathbf{A}^{-1}\mathbf{x}_*$.

Therefore, the GP model may perform model training with a finite observation sample (**x**, **y**), and when a test

data input $\mathbf{x}_*$ is inputted to the GP model, estimation of a label $f_*$ and the prediction uncertainty (variance) may be given simultaneously.

A theoretical deduction process of a brief linear noise-free GP model is given above. For a non-linear model, a GP processing mode first converts the non-linear model in low dimensional space into a linear model in high dimensional space through a kernel function (Kernel function), i.e., through a group of base functions $\Phi(\cdot)$, a sample vector $\mathbf{x}$ in finite dimensional space is mapped to the high dimensional space, and a standard linear model is further extended as:

$$f(x) = \Phi(\mathbf{x})^T w;$$

the model is the standard linear model after x-dimension extension. A processing mode is the same as that of the standard linear model, i.e., a prediction label $f_*$ with the test input being $x_*$ obeys the following conditional distributions:

$$f_* | \mathbf{x}_*, X, \mathbf{y} \sim \mathcal{N}\left(\frac{1}{\sigma_n^2}\phi(\mathbf{x}_*)^\top A^{-1}\Phi\mathbf{y}, \ \phi(\mathbf{x}_*)^\top A^{-1}\phi(\mathbf{x}_*)\right)$$

where

$$A = \sigma_n^{-2}\Phi(\mathbf{X})\Phi(\mathbf{X})^T + \textstyle\sum_p{}^{-1}$$

$\Phi(\mathbf{x})$ is a high-dimensional or even infinite-dimensional vector. An inner product of the high-dimensional vectors has high computational complexity, so that a kernel approximate to the inner product of the high-dimensional vectors is introduced here: where

$$k(\mathbf{x}, \mathbf{x}') = \varphi(\mathbf{x})^T\varphi(\mathbf{x}')$$

$$\varphi(\mathbf{x}) = \textstyle\sum_p{}^{1/2}\phi(\mathbf{x})$$

Common kernels include: a radial basis kernel;

$$k(x_i, x_j) = \exp\left(-\frac{d(x_i, x_j)^2}{2l^2}\right)$$

and a rational quadratic kernel:

$$k(x_i, x_j) = \left(1 + \frac{d(x_i, x_j)^2}{2\alpha l^2}\right)^{-\alpha}$$

where d is a Euclidean distance, and $\alpha, l$ is a hyper-parameter. The radial basis kernel is the most widely used due to the derivable smooth characteristic of an infinite order, and a relevant theory proves that the radial basis kernel may be split into the inner product of two infinite dimensional vectors, so that mapping from a finite dimensional vector x to an infinite dimensional vector can be realized.

1. For noisy-free cases: y=f(x)

A test sample output obeys the Gaussian distribution:

$$\mathbf{f}_* \sim \mathcal{N}\left(0, K(X_*, X_*)\right)$$

Therefore, a combined distribution of the test output and the training output is shown as follows:

$$\begin{bmatrix} \mathbf{f} \\ \mathbf{f}_* \end{bmatrix} \sim \mathcal{N}\left( 0, \begin{bmatrix} K(X,X) & K(X,X_*) \\ K(X_*,X) & K(X_*,X_*) \end{bmatrix} \right)$$

A conditional Gaussian probability distribution may be obtained according to the combined distribution:

$$\mathbf{f}_*|X_*,X,\mathbf{f} \sim \mathcal{N}\big(K(X_*,X)K(X,X)^{-1}\mathbf{f},$$
$$K(X_*,X_*) - K(X_*,X)K(X,X)^{-1}K(X,X_*)\big)$$

The mean of the conditional Gaussian probability distribution is the maximum posterior probability estimation of the predicted value, and the variance represents the prediction uncertainty (variance):

$$\mathbb{E}(\mathbf{f}_*) = K(X_*,X)K(X,X)^{-1}\mathbf{f}$$

$$\mathbb{V}(\mathbf{f}_*) = K(X_*,X_*) - K(X_*,X)K(X,X)^{-1}K(X,X_*)$$
$$K(X_*,X) = K(X,X_*)^T$$

$$K(X_*,X) \in \mathfrak{R}^{n_* \times n}$$

If $X_* = \begin{bmatrix} \mathbf{x}_{*,1}, \mathbf{x}_{*,2}, \mathbf{x}_{*,3}, \ldots, \mathbf{x}_{*,n_*} \end{bmatrix}$, and $X = [\mathbf{x}_1, \mathbf{x}_2, \mathbf{x}_3, \ldots, \mathbf{x}_n]$,

$$K(X_*,X) = \begin{bmatrix} k(\mathbf{x}_{*,1}, \mathbf{x}_1) & \cdots & k(\mathbf{x}_{*,1}, \mathbf{x}_n) \\ \vdots & \ddots & \vdots \\ k(\mathbf{x}_{*,n}, \mathbf{x}_1) & \cdots & k(\mathbf{x}_{*,n}, \mathbf{x}_n) \end{bmatrix}$$

$$k(\mathbf{x}_{*,1}, \mathbf{x}_1) = \exp\left(-a|\mathbf{x}_{*,1} - \mathbf{x}_1|^2\right) = \varphi(\mathbf{x}_{*,1})^T \varphi(\mathbf{x}_1)$$

Where $n_*$ and n respectively are the number of samples of a test set and a training set.
2. For noisy cases: y=f(x)+n

$$\begin{bmatrix} \mathbf{y} \\ \mathbf{f}_* \end{bmatrix} \sim \mathcal{N}\left( \mathbf{0}, \begin{bmatrix} K(X,X) + \sigma_n^2 I & K(X,X_*) \\ K(X_*,X) & K(X_*,X_*) \end{bmatrix} \right)$$

$$\mathbb{E}(\mathbf{f}_*) = K(X_*,X)(K(X,X) + \sigma_n^2 I)^{-1}\mathbf{f}$$

$$\mathbb{V}(\mathbf{f}_*) = K(X_*,X_*) - K(X_*,X)(K(X,X) + \sigma_n^2 I)^{-1}K(X,X_*)$$

Compared to replacing $K(X, X)$ in a noisy-free case with $K(X,X) + \sigma_n^2 I$, a more compact form may be further written:

$$\bar{f}_* = \mathbf{k}_*^\top (K + \sigma_n^2 I)^{-1}\mathbf{y},$$

$$\mathbb{V}[f_*] = k(\mathbf{x}_*, \mathbf{x}_*) - \mathbf{k}_*^{\top}(K + \sigma_n^2 I)^{-1}\mathbf{k}_*$$

3. Optimization of a kernel function parameter:

An optimal hyper-parameter of a marginal probability estimation model is maximized according to training window data:

$$\max_{\theta} p(\mathbf{y}\,|\,\mathbf{X},\theta) = -\frac{1}{2}\left\{\mathbf{y}^T\left(\mathbf{C}(\theta)\right)^{-1}\mathbf{y} + \log\det\left(\mathbf{C}(\theta)\right) + n\log\left(2\pi\right)\right\}$$

Where

$$\mathbf{C}(\theta) = K(\theta) + \sigma_n^2 I$$

Therefore, in a possible implementation, the configuration information includes at least one of the following.

1) First configuration information of a kernel function.

The first configuration information may include:

the number of the kernel functions, for example, the number of the kernel functions used by the time series prediction model;
a hyper-parameter of the kernel function, for example, the hyper-parameter of the kernel function used by the time series prediction model; and
a type of the kernel function, for example, which kernel functions being used by the time series prediction model, such as a square exponential kernel, a quadratic rational kernel, a constant kernel, other custom kernel functions, etc.

2) A first task identifier, which is used for indicating a task associated with the first configuration information.
For example, the first task identifier indicates a task associated with kernel function configuration in (1). The time series prediction model is used for predicting first information. The first information may include information related to a time series such as CSI, position information, and beam information.
3) Optimizer selection information, which is used for optimizing the hyper-parameter of the kernel function.
For example, the optimizer selection information may include one of the following:

a) A first configuration parameter of a gradient descent optimization algorithm, the first configuration parameter includes: an initial value, a step length, and a termination condition. That is, an optimizer uses the gradient descent optimization algorithm, and the optimizer selection information includes initial value setting, step length setting, and termination condition in the gradient descent optimization algorithm.
b) A second configuration parameter of a grid search optimization algorithm, the second configuration parameter includes: an upper bound of grid search with different hyper-parameters, a lower bound of grid search with different hyper-parameters, and a step length of grid search with different hyper-parameters. That is, the optimizer uses a grid search method, and the optimizer selection information includes information such as the upper bound of grid search with different hyper-parameters, the lower bound of grid search with different hyper-parameters, and the step length of grid search with different hyper-parameters.
c) The number of times that the optimizer runs, for example, the number of times for execution by the optimizer described in a) or b) during a training process of the time series prediction model.

4) First model training configuration.
The first model training configuration includes at least one of the following:

a) A length of a first training window. For example, if training data includes CSI of N time units, the length of the first training window is N time units.
b) An input of model training, for example, time unit numbers [1, 2, ..., N] of the inputs of model training.
c) A label of model training, for example, CSI corresponding to the time unit numbers of the inputs of model training.
d) A time interval for sampling in a first training window, i.e., how often samples are collected at intervals within the first training window.

5) First model prediction configuration.

The first model prediction configuration may include at least one of the following:

a) A length of a first prediction window, for example, CSI of future M time units is predicted based on the CSI of N time units, and the length of the first prediction window is M time units.

b) A prediction input, for example, the CSI of future M time units is predicted based on training data of N time units, and the input of model prediction is a time unit number corresponding to the CSI of M time units, such as [N+1,..., N+M].

c) A prediction output.

A prediction output of the time series prediction model may include: label information corresponding to a time unit number of the model prediction input, such as [N+1,...,N+M]; and error information of a model prediction label, for example, prediction variance of an output of the time series prediction model and/or a prediction error of the output of the time series prediction model.

d) A time interval for sampling in a first prediction window, i.e., a time interval between two samples in the first prediction window.

6) A life cycle of the time series prediction model.

The life cycle of the time series prediction model includes, but is not limited to, one of the following: entry-into-force time, failure time, and run time.

7) Computing mode configuration of the time series prediction model.

The computing mode configuration includes one of the following:

a) serial computing, i.e., the training of a GP model is performed in the same computing unit, for example, is performed in a particular core or thread of a CPU; and

b) parallel computing, i.e., the training of the GP model is performed simultaneously in a plurality of computing units, for example, is performed in a plurality of cores or threads of the CPU.

It is to be noted that, the time unit in the embodiments of this application is a preset unit of time. For example, the time unit may include at least one of the following: a reference signal cycle, a prediction cycle, a symbol (OFDM) symbol, a sub-frame, a radio frame, millisecond, second, or the like. The embodiments of this application are not specifically limited thereto.

In a possible implementation, the kernel function indicated in the first configuration information of the kernel function in (1) is at least one kernel function in a kernel function list. The first communication device and the second communication device are configured with the kernel function list in advance. The kernel function list may include identifiers of one or more kernel functions, and one kernel function may be uniquely determined through the identifier.

In a possible implementation, the task identifier in (2) is at least one task identifier in a task list. The first communication device and the second communication device are configured with the task list in advance. That is to say, the first communication device is configured, in advance, with the task list related to time series prediction same as the second communication device, and a task may be uniquely determined by a corresponding task identifier.

In a possible implementation, the optimizer selection information in (3) includes a target optimizer identifier. The target optimizer identifier is at least one optimizer identifier in an optimizer list. The optimizer list includes a correspondence relationship between the optimizer identifier and parameter configuration. The first communication device and the second communication device are configured with the optimizer list in advance. That is to say, the first communication device is configured, in advance, with an optimizer selection and specific parameter configuration list same as the second communication device, and optimizer selection and configuration information may be uniquely determined by a list identifier.

In a possible implementation, the model training configuration in (4) may further include:

a) a first processing mode for a training input, and the first processing mode includes: linear scaling processing or non-linear scaling processing; and

b) a second processing mode for a label, and the second processing mode includes: linear normalization processing (e.g., scale*X) or mean normalization processing (e.g., log2(X)).

In a possible implementation, the computing mode configuration may be determined by the first communication device according to computing power and storage capacity of the first communication device, and may also be dynamically configured from the second communication device to the first communication device.

In a possible implementation, after the first communication device obtains the configuration information of the time series prediction model from the second communication device, the method may further include: sending, by the first communication device, feedback information to the second communication device. The feedback information is used for indicating that the first communication device supports the configuration information, or the feedback information is used for indicating that the first communication device does not support the configuration information. In the possible implementation, after obtaining the configuration information from the second communication device, the first communication device may provide feedback to the second communication device on whether the first communication device supports the configuration information, so that the second communication device may obtain the fact whether the first communication device may be configured with a time series prediction model corresponding to the configuration information.

In a possible implementation, the feedback information includes, but is not limited to, at least one of the following:

1) second indication information, which is used for indicating a kernel function supported by the first communication device, and the kernel function being one or more kernel functions configured in the configuration information; and that is to say, the second indication information is used for indicating which one or more of the kernel functions configured by the configuration information supported by the first communication device;

2) third indication information, which is used for indicating that the first communication device has a requirement for task prediction, or is used for indicating that the first communication device does not have the requirement for task prediction, and the task being a task configured by the configuration information; and that is to say, the third indication information is used for indicating whether the first communication device has a requirement for predicting a related task configured by the configuration information;

3) fourth indication information, which is used for indicating that the first communication device supports a target optimizer, or is used for indicating that the first communication device does not support the target optimizer, and the target optimizer being an optimizer configured by the configuration information; and that is to say, the fourth indication information is used for indicating whether the first communication device supports an optimizer configured by the configuration information;

4) fifth indication information, which is used for indicating that the first communication device supports model training configuration in the configuration information, or is used for indicating that the first communication device does not support the model training configuration in the configuration information; that is to say, the fifth indication information is used for indicating whether the first communication device supports the model training configuration configured by the configuration information; for example, considering the limited storage capacity and/or computing power of the first communication device, the first communication device may not support long training window sizes; and if a length of the first training window configured by the configuration information exceeds the storage capacity and/or computing power of the first communication device, the first communication device may provide feedback that the first communication device does not support the model training configuration in the configuration information; or

5) sixth indication information, which is used for indicating that the first communication device supports model prediction configuration in the configuration information, or is used for indicating that the first communication device does not support the model prediction configuration in the configuration information. That is to say, the sixth indication information is used for indicating whether the first communication device supports the model prediction configuration in the configuration information, for example, whether supports a length of a prediction window configured by the configuration information, etc.

In a possible implementation, to make the configuration information configured by the second communication device more in line with requirements of the first communication device, before the first communication device obtains the configuration information of the time series prediction model from the second communication device, the method may further include: recommending, by the first communication device, recommended configuration of the time series prediction model to the second communication device according to second information. Through the possible implementation, the configuration information configured by the second communication device for the first communication device can be better adapted to the first communication device.

In a possible implementation, the recommended configuration includes at least one of the following:

1) a recommended kernel function, i.e., a kernel function used through recommendation of the first communication device;

2) recommended model training configuration, i.e., model training configuration used through recommendation of the first communication device, such as the length of the first training window, etc.; or

3) recommended model prediction configuration, i.e., model prediction configuration used through recommendation of the first communication device, such as the length of the prediction window, etc.

In a possible implementation, the second information includes at least one of the following:

1) to-be-predicted statistical information of first information, for example, mean and/or variance of the first information;

2) an estimation error of the first information; unknown information being predicted based on known information, so that the estimation error of the first information refers to an estimation error of the known information (historical information); and for example, for CSI prediction, CSI of the past N time units being estimated by a terminal based on a pilot frequency (SRS), and there being an error in estimation;

3) statistical information of the estimation error, for example, mean and/or variance of the estimation error of the first information;

4) a model prediction error;

5) statistical information of the model prediction error, for example, mean and/or variance of the model prediction error;

6) mobility information of the first communication device, for example, at least one of a movement speed, beam switching information, cell handover information, or the like of the first communication device;

7) statistical information of noise, such as a signal-to-noise ratio, a signal to interference plus noise ratio, and the like; or

8) performance requirement information. The performance requirement information includes at least one of the following: requirement information of prediction accuracy, requirement information of processing delay, or requirement information of computing delay.

In a possible implementation, after the first communication device uses the configuration information to configure the time series prediction model, the time series prediction model may be trained based on the model training configuration. After training, the time series prediction model is used to predict the first information based on the model prediction configuration. When the time series prediction model is used for prediction, the processing mode for the prediction input and output is the same as the processing mode of the training input and output during training.

In a possible implementation, after the first communication device uses the configuration information to configure the time series prediction model, the method may further include: reporting, by the first communication device, target prediction information to the second communication device. The target prediction information is prediction information that is obtained by predicting the first information using the time series prediction model. That is, the first communication device reports the predicted first information to the second communication device. For example, the first communication device uses the time series prediction model to predict CSI of future M time units according to CSI of N time units that has been obtained through measurement, and reports the CSI of M time units that is obtained through prediction.

In a possible implementation, the target prediction information includes at least one of the following:

1) the first information obtained through prediction;

2) a prediction error corresponding to the predicted first information;

3) a second task identifier, where the second task identifier is used for indicating a specific category of the first information, e.g., as CSI or beam information, etc.; in specific applications, the second task identifier may be the first task identifier, or may be one of the first task identifiers; in addition, the first communication device may simultaneously have a plurality of prediction tasks; the second communication device configures one piece of configuration information based on each prediction task; and the second task identifier carried in the target prediction information reported by the first communication device may indicate a prediction task corresponding to the currently-reported target prediction information;

4) configuration-related information of a second training window, i.e., information related to training window configuration of the time series prediction model corresponding to the predicted first information, where the second training window may be the same as the training window corresponding to training window configuration configured in the configuration information, and may also be one of the training windows corresponding to training window configuration configured in the configuration information; or

5) information related to a second prediction window.

In a possible implementation, the configuration-related information of the second training window may include at least one of the following:

a) a length of the second training window, for example, if training data including CSI of N time units, N being the length of the training window;

b) an input of model training, such as a time unit number [1, 2,..., N]; or

c) first time stamp information. The first time stamp information includes at least one of the following: a number of the second training window, start time (i.e. a start moment) of the second training window, end time (i.e. an end moment) of the second training window, or a time interval (i.e. a time interval between two samples in the second training window) for sampling a second training window sample. For example, if the CSI of the second training window is CSI of the $0^{th}$, $2^{th}$, $4^{th}$, $6^{th}$, and $8^{th}$ time unit, the time interval for sampling in the second training window is 2 time units.

In a possible implementation, the configuration-related information of the second prediction window includes at least one of the following:

a) a length of the second prediction window;
b) an input of model prediction; or
c) second time stamp information. The second time stamp information includes at least one of the following: a number of the second prediction window, start time of the second prediction window, end time of the second prediction window, or a time interval for sampling in a second prediction window.

In a possible implementation, the time series prediction model may be a time series prediction model based on a neural network.
In the possible implementation, optionally, the configuration information includes at least one of the following:

1) structural information of the time series prediction model,
optionally, the structural information of the time series prediction model being able to include:

a) a type of the neural network, such as a convolutional neural network, a fully-connected neural network, Transformer, and the like; and
b) hyper-parameter information of the neural network, which may include:

i. input-output dimensions;
ii. the number of layers of the neural network, and the number of neurons at each layer;
iii. an activation function; and
iv. the number of key modules, for example, if a Transformer model being used, the number of encoder modules and/or the number of decoder modules of the Transformer being able to be included;

2) a weight value of the time series prediction model, for example, the weight value, offset, and the like of each node in the neural network;
3) configuration of the time series prediction model, which includes at least one of the following: an optimizer or a loss function, for example, by compiling some information of a model, such as the optimizer and the loss function; or
4) state information of the optimizer of the time series prediction model.

In a possible implementation, the first communication device obtaining the configuration information of the time series prediction model from the second communication device includes one of the following:

(1) receiving the configuration information configured non-periodically by the second communication device; for example, the first communication device sending a request to the second communication device, and the second communication device configuring the configuration information to the first communication device; or the second communication device abruptly configuring the configuration information for the first communication device;
(2) receiving the configuration information configured periodically by the second communication device; for example, the second communication device periodically configuring the configuration information to the first communication device at a set cycle;
(3) agreeing, by the first communication device, on the configuration information with the second communication device, i.e., dynamically configuring the configuration information; and
(4) determining the configuration information by the first communication device, and reporting the configuration information to the second communication device, receiving confirmation information of the second communication device, and then obtaining the configuration information.

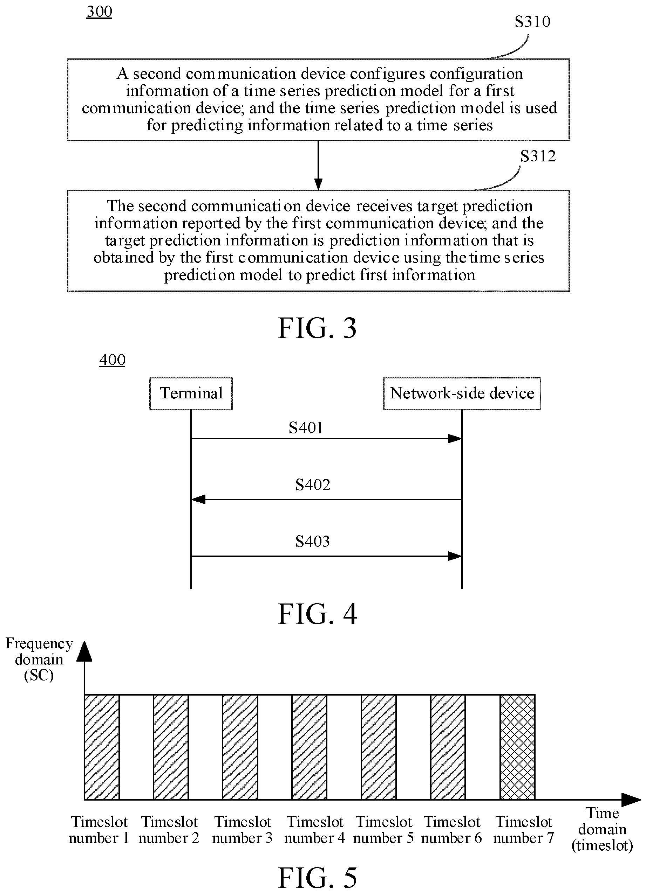

FIG. 3 is a schematic flow chart of a prediction information obtaining method according to an embodiment of this application. As shown in FIG. 3, the method 300 mainly includes the following steps.
S310, a second communication device configures configuration information of a time series prediction model for a first communication device; and the time series prediction model is used for predicting first information, and the first information is information related to a time series.
The configuration information is the same as the configuration information in the method 200, and details refer to description in the method 200.
S312, the second communication device receives target prediction information reported by the first communication device; and the target prediction information is prediction information that is obtained by the first communication device using the time series prediction model to predict first information.

The method 300 is an execution method of a second communication device side corresponding to the method 200, and has the same or corresponding possible implementations as the method 200. Details refer to the description in the method 200. Only some of the possible implementations involved in the method 300 are described below.

In a possible implementation, the configuration information includes at least one of the following:

1) first configuration information of a kernel function, the first configuration information including: the quantity of the kernel functions, a hyper-parameter of the kernel function, and a type of the kernel function;
2) a task identifier, which is used for indicating a task associated with the first configuration information;
3) optimizer selection information;
4) model training configuration, the model training configuration including at least one of the following: a length of a first training window, an input of model training, a label of model training, or a time interval for sampling in a first training window;
5) model prediction configuration, the model prediction configuration including at least one of the following: a length of a prediction window, a prediction input, a prediction output, or a time interval for sampling in a prediction window;
6) a life cycle of the time series prediction model; or
7) computing mode configuration of the time series prediction model, the computing mode configuration including: serial computing or parallel computing.

In a possible implementation, the optimizer selection information includes at least one of the following:

1) a first configuration parameter of a gradient descent optimization algorithm, the first configuration parameter including: an initial value, a step length, and a termination condition; or
2) a second configuration parameter of a grid search optimization method, the second configuration parameter including: an upper bound of grid search with different hyper-parameters, a lower bound of grid search with different hyper-parameters, and a step length of grid search with different hyper-parameters.

In a possible implementation, the prediction output includes:

1) label information corresponding to a time unit number of the prediction input; and
2) prediction variance of an output of the time series prediction model and/or a prediction error of the output of the time series prediction model.

In a possible implementation, the life cycle of the time series prediction model includes: entry-into-force time, failure time, and run time.

In a possible implementation, after the second communication device configures the configuration information of the time series prediction model for the first communication device, the method further includes the following.

The second communication device receives feedback information sent by the first communication device. The feedback information is used for indicating that the first communication device supports the configuration information, or the feedback information is used for indicating that the first communication device does not support the configuration information.

In a possible implementation, the feedback information includes at least one of the following:

1) second indication information, which is used for indicating a kernel function supported by the first communication device, and the kernel function being one or more kernel functions configured in the configuration information;
2) third indication information, which is used for indicating that the first communication device has a requirement for task prediction, or is used for indicating that the first communication device does not have the requirement for task prediction, and the task being a task configured by the configuration information;
3) fourth indication information, which is used for indicating that the first communication device supports a target optimizer, or is used for indicating that the first communication device does not support the target optimizer, and the target optimizer being an optimizer configured by the configuration information;
4) fifth indication information, which is used for indicating that the first communication device supports model training configuration in the configuration information, or is used for indicating that the first communication device does not support the model training configuration in the configuration information; or
5) sixth indication information, which is used for indicating that the first communication device supports model prediction configuration in the configuration information, or is used for indicating that the first communication device does not support the model prediction configuration in the configuration information.

In a possible implementation, the kernel function is at least one kernel function in a kernel function list. The first communication device and the second communication device are configured with the kernel function list in advance.

In a possible implementation, the task identifier is at least one task identifier in a task list. The first communication device and the second communication device are configured with the task list in advance.

In a possible implementation, the optimizer selection information includes a target optimizer identifier. The target optimizer identifier is at least one optimizer identifier in an optimizer list. The optimizer list includes a correspondence relationship between the optimizer identifier and parameter configuration. The first communication device and the second communication device are configured with the optimizer list in advance.

In a possible implementation, the model training configuration further includes:

1) a first processing mode for a training input, the first processing mode including: linear scaling processing or non-linear scaling processing; and
2) a second processing mode for a label, the second processing mode including: linear normalization processing or mean normalization processing.

In a possible implementation, the computing mode configuration is determined by the first communication device according to computing power and storage capacity of the first communication device.

In a possible implementation, before the second communication device configures the configuration information of the time series prediction model for the first communication device, the method further includes: receiving, by the second communication device, recommended configuration of the time series prediction model that is sent by the first communication device.

In a possible implementation, the recommended configuration includes at least one of the following:

a recommended kernel function;
recommended model training configuration; or
recommended model prediction configuration.

In a possible implementation, the second communication device configuring the configuration information of the time series prediction model for the first communication device includes:

receiving, by the second communication device, second information reported by the first communication device; and configuring the configuration information of the time series prediction model for the first communication device based on the second information.

The second information includes at least one of the following:

statistical information of first information;
an estimation error of the first information;
statistical information of the estimation error;
a model prediction error;
statistical information of the model prediction error;
mobility information of the first communication device;
statistical information of noise; or
performance requirement information. The performance requirement information includes at least one of the following: requirement information of prediction accuracy, requirement information of processing delay, or requirement information of computing delay.

In a possible implementation, the target prediction information includes at least one of the following:

the first information obtained through prediction;
a prediction error corresponding to the predicted first information;
a task identifier;
information related to configuration of a second training window; or
information related to a second prediction window.

In a possible implementation, the information related to the configuration of the second training window includes at least one of the following:

a length of the second training window;

an input of model training; or
first time stamp information. The first time stamp information includes at least one of the following: a number of the second training window, start time of the second training window, end time of the second training window, or a time interval for sampling in a second training window.

In a possible implementation, the information related to the second prediction window includes at least one of the following:

a length of the second prediction window;
an input of model prediction; or
second time stamp information. The second time stamp information includes at least one of the following: a number of the second prediction window, start time of the second prediction window, end time of the second prediction window, or a time interval for sampling in a second prediction window.

In a possible implementation, before the second communication device configures the configuration information of the time series prediction model for the first communication device, the method further includes: receiving model configuration request information sent by the first communication device.
In a possible implementation, the time series prediction model includes a time series prediction model based on a neural network. The configuration information includes at least one of the following:

structural information of the time series prediction model;
a weight value of the time series prediction model;
configuration of the time series prediction model, the configuration including at least one of the following: an optimizer or a loss function; or
state information of the optimizer of the time series prediction model.

In a possible implementation, the second communication device configuring the configuration information of the time series prediction model for the first communication device includes one of the following:

1) non-periodically configuring, by the second communication device, the configuration information of the time series prediction model for the first communication device;
2) periodically configuring, by the second communication device, the configuration information of the time series prediction model for the first communication device;
3) agreeing, by the second communication device on the configuration information with the first communication device; and
4) reporting, by the second communication device, the configuration information, and sending confirmation information to the first communication device.

The technical solutions provided in the embodiments of this application are described below with an example of using a terminal to predict CSI.
FIG. 4 is another flow chart of a model construction method according to an embodiment of this application. As shown in FIG. 3, the method 400 mainly includes the following steps.
S401, a terminal requests GP model configuration information from a core network device.
The request GP model configuration information includes:

a) kernel function configuration: two kernel functions of a radial basis function and a rational quadratic kernel function being used as kernel functions of CSI prediction:

$$k(x_i, x_j) = \exp\left(-\frac{d(x_i, x_j)^2}{2l^2}\right)$$

$$k(x_i, x_j) = \left(1 + \frac{d(x_i, x_j)^2}{2\alpha l^2}\right)^{-\alpha};$$

b) a task identifier: "1" being used for indicating CSI prediction;

c) optimizer selection: a grid search method, grid search ranges of different kernel functions all being set to [-10, 10], and a step length being 1;

d) the number of times that the optimizer runs: 1;

e) model training configuration: a length of a training window being N time unit, i.e., the number of pieces of historical CSI in the training window is N, an input of model training is [1, 2, ..., N], a label of model training is CSI corresponding to a time unit number [1, 2, ..., N], and a time interval for sampling in a training window is 2 time units;

f) model prediction configuration information: a length of a prediction window being M time units, i.e., CSI of future M time units is predicted based on CSI of historical N time units, the input of model training is the time unit number [N+1, N+2, ..., N+M], and a prediction output is CSI corresponding to the time unit number [N+1, N+2, ..., N+M], and corresponding prediction variance;

using the time unit being 1 time slot as an example, as shown in FIG. 5, the length of the training window being 6 time slots, a sampling interval of the training window sample being 2 time slots, the length of the prediction window being 1 time slot, and a sampling interval of the prediction window sample being 2 time slots; and

g) a GP model coming into effect from the $s^{th}$ time unit, and failing at the $s'^{th}$ time unit.

S402, a network-side device configures GP model-related information to the terminal.

S403, the terminal reports GP model prediction information to the network-side device.

The reported prediction information may include:

a) predicted CSI of future M time units;

b) M variances corresponding to the predicted CSI of future M time units;

c) a task identifier: "1" identifying CSI prediction;

d) information related to configuration of a training window; and

e) prediction window configuration information.

The reported information related to configuration of the training window may include:

i. the length of the training window being 6 time units;

ii. the input of model training being a time unit number [1, 2, ..., 6]; and

iii. time stamp information.

The time stamp information may include:

1. a training window being numbered as T, indicating relative time compared to the beginning of training the training window;

2. start time of the training window being s, indicating the start time for training;

3. end time of the training window being s', indicating the end time for training; and

4. a time interval for sampling in a training window being 2, and using CSI of the [0, 2, ..., 10, or 12]$^{th}$ time unit for training.

The prediction window configuration information may include:

i. a length of a prediction window being 1, and CSI of future 1 time unit being predicted based on CSI of 6 time units of the training window;

ii. an input of model prediction, with a time unit number [7]; and

iii. time stamp information, where the time stamp information may include:

1. a prediction window being numbered as T', indicating relative time compared to the beginning of prediction of the prediction window;

2. start time of the prediction window being p, indicating the start time for prediction;

3. end time of the prediction window being p', indicating the end time for prediction; and

4. a time interval for sampling in a prediction window being 2, and CSI of the [14]$^{th}$ time unit being predicted.

In the technical solutions provided in the embodiments of this application, configuration information and flows for interaction in a wireless communication system when using the time series prediction model to predict key indicators during wireless communication are provided, so that the terminal may deploy the time series prediction model based on the configuration of the network-side device, and predict parameters related to a time series.

In the model construction method provided in the embodiments of this application, an execution subject may be a model construction apparatus. In the embodiments of this application, the model construction apparatus provided in the embodiments of this application is described with an example of using the model construction apparatus to execute the model construction method.

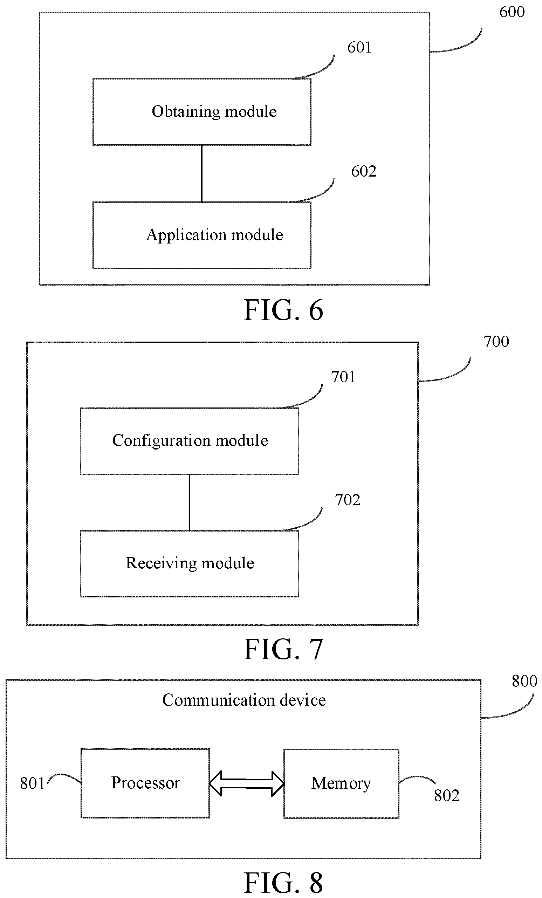

FIG. 6 is a schematic structural diagram of a model construction apparatus according to an embodiment of this application. As shown in FIG. 6, the apparatus 600 mainly includes an obtaining module 601 and an application module 602.

In this embodiment of this application, the obtaining module 601 is configured to obtain configuration information of a time series prediction model from a second communication device. The time series prediction model is used for predicting information related to a time series. The application module 602 is configured to construct the time series prediction model based on the configuration information.

In a possible implementation, the apparatus further includes: a first sending module, configured to send feedback information to the second communication device. The feedback information is used for indicating that the first communication device supports the configuration information, or the feedback information is used for indicating that the first communication device does not support the configuration information.

In a possible implementation, the apparatus further includes: a recommendation module, configured to recommend recommended configuration of the time series prediction model to the second communication device according to second information.

In a possible implementation, the apparatus further includes: a reporting module, configured to report target prediction information to the second communication device. The target prediction information is prediction information that is obtained by predicting the first information using the time series prediction model.

The model construction apparatus in this embodiment of this application may be an electronic device, such as an electronic device having an operating system, and may also be a component in the electronic device, such as an integrated circuit or a chip. The electronic device may be a terminal, and may also be a device other than the terminal. For example, the terminal may include, but not limited to, the type of the terminal 11 listed above. Other devices may be servers, Network Attached Storages (Network Attached Storage, NAS), etc., and are not specifically limited in this embodiment of this application.

The model construction apparatus provided in this embodiment of this application can implement all processes implemented by the first communication device or terminal in the method embodiments shown in FIG. 2 to FIG. 5, and achieves the same technical effect, and details of which are omitted here for brevity.

FIG. 7 is a schematic structural diagram of a prediction information obtaining apparatus according to an embodiment of this application. As shown in FIG. 7, the apparatus 700 mainly includes a configuration module 701 and a receiving module 702.

In this embodiment of this application, the configuration module 701 is configured to configure configuration information of a time series prediction model for a first communication device. The time series prediction model is used for predicting information related to a time series. The receiving module 702 is configured to receive target prediction information reported by the first communication device. The target prediction information is prediction information that is obtained by the first communication device using the time series prediction model to predict first information.

In a possible implementation, the receiving module 702 is further configured to receive feedback information sent by the first communication device. The feedback information is used for indicating that the first communication device supports the configuration information, or the feedback information is used for indicating that the first communication device does not support the configuration information.

In a possible implementation, the receiving module 702 is further configured to receive recommended configuration of the time series prediction model that is sent by the first communication device.

In a possible implementation, the configuration module 701 configuring the configuration information of the time series prediction model for the first communication device includes:

receiving second information reported by the first communication device; and
configuring the configuration information of the time series prediction model for the first communication device based on the second information.

The second information includes at least one of the following:

statistical information of first information;
an estimation error of the first information;
statistical information of the estimation error;
a model prediction error;
statistical information of the model prediction error;

mobility information of the first communication device;

statistical information of noise; or

performance requirement information. The performance requirement information includes at least one of the following: requirement information of prediction accuracy, requirement information of processing delay, or requirement information of computing delay.

In a possible implementation, the receiving module 702 is further configured to receive model configuration request information sent by the first communication device.

The prediction information obtaining apparatus provided in this embodiment of this application can implement all processes implemented by the second communication device or network-side device in the method embodiments shown in FIG. 2 to FIG. 5, and achieves the same technical effect, and details of which are omitted here for brevity.

Optionally, as shown in FIG. 8, an embodiment of this application further provides a communication device 800, including a processor 801 and a memory 802. The memory 802 stores a program or instruction executable on the processor 801. For example, when the communication device 800 is a first communication device, the program or instruction, when being executed by the processor 801, implements all steps of the model construction method embodiment, and can achieve the same technical effect. When the communication device 800 is a second communication device, the program or instruction, when being executed by the processor 801, implements all steps of the prediction information obtaining method embodiment, and can achieve the same technical effect, and details of which are omitted here for brevity.

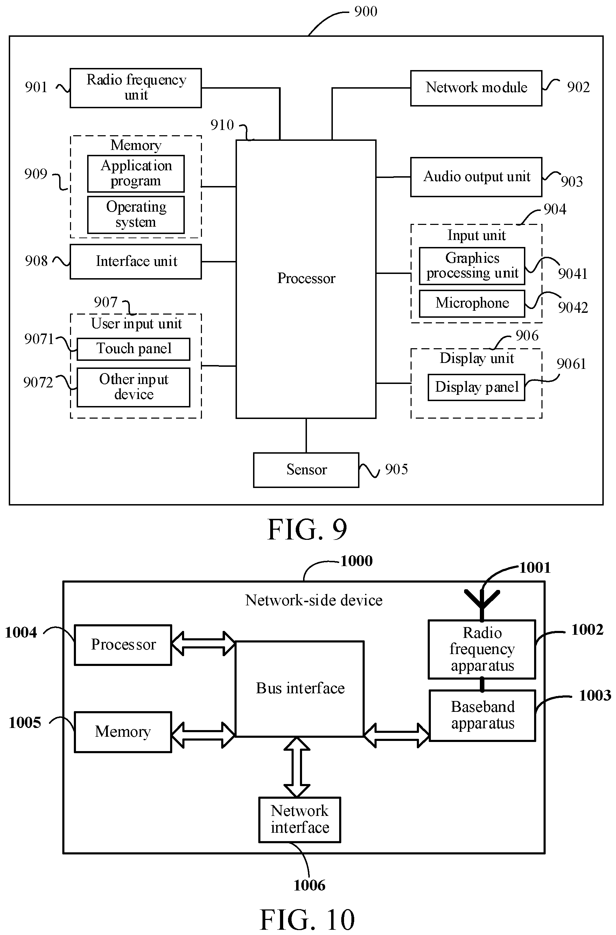

An embodiment of this application further provides a terminal, including a processor and a communication interface. The processor is configured to implement all steps of the model construction method embodiment. The communication interface is configured to communicate with an external communication device. The terminal embodiment corresponds to the first communication device side method embodiment, so that all implementation processes and implementations of the method embodiment are applicable to the terminal embodiment, and can achieve the same technical effect. Specifically, FIG. 9 is a schematic diagram of a hardware structure of a terminal implementing an embodiment of this application.

The terminal 900 includes, but is not limited to, at least some of the components such as a radio frequency unit 901, a network module 902, an audio output unit 903, an input unit 904, a sensor 905, a display unit 906, a user input unit 907, an interface unit 908, a memory 909, and a processor 910.

It may be understood by those skilled in the art that, the terminal 900 may further include a power supply (such as a battery) for supplying power for each component. The power supply may be logically connected to the processor 910 by means of a power management system, so that functions such as charging management, discharging management, and power consumption management can be realized by means of the power management system. A structure of the terminal shown in FIG. 9 does not constitute a limitation to the terminal. The terminal may include more or less components than that shown in the figure, or combine some components, or arrange different components, which is not described herein again.

It is to be understood that, in this embodiment of this application, the input unit 904 may include a Graphics Processing Unit (Graphics Processing Unit, GPU) 9041 and a microphone 9042. The GPU 9041 processes a static picture obtained by an image capture device (for example, a camera) in a video capture mode or an image capture mode or image data of a video. The display unit 906 may include a display panel 9061. The display panel 9061 may be configured in the form of a liquid crystal display, an organic light emitting diode, or the like. The user input unit 907 includes at least one of a touch panel 9071 or other input devices 9072. The touch panel 9071 is also called a touch screen. The touch panel 9071 may include a touch detection apparatus and a touch controller. Other input devices 9072 may include, but are not limited to, physical keyboards, function keys (such as volume control buttons, switch buttons, or the like), trackballs, mice, and joystick, which are not described herein again.

In this embodiment of this application, after receiving downlink data from a network-side device, the radio frequency unit 901 may transmit same to the processor 910 for processing. In addition, the radio frequency unit 901 may send uplink data to the network-side device. Generally, the radio frequency unit 901 includes, but is not limited to, an antenna, an amplifier, a transceiver, a coupler, a low noise amplifier, a duplexer, and the like.

The memory 909 may be configured to store a software program or instruction and various data. The memory 909 may mainly include a first storage area storing a program or instruction, and a second storage area storing data. The first storage area may store an operating system, an application program required by at least one function (for example, a sound playback function and an image display function), and the like. Moreover, the memory 909 may include a volatile memory or a non-volatile memory. Alternatively, the memory 909 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a Synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM) and a direct rambus RAM (Direct Rambus RAM, DRRAM). The memory 909 in this embodiment of this application includes, but is not limited to, memories of these and any other proper types.

The processor 910 may include one or more processing units. Optionally, the processor 910 integrates an application processor and a modem processor. The application processor mainly processes operations of an operating system, a user interface, an application program, and the like. The modem processor mainly processes a wireless communication signal, such as a baseband processor. It is to be understood that, the above modem processor may not be integrated into the processor 910.

The radio frequency unit 901 is configured to obtain configuration information of a time series prediction model from a second communication device. The time series prediction model is used for predicting information related to a time series.

The processor 910 is configured to use the configuration information to configure the time series prediction model.

An embodiment of this application further provides a network-side device, including a processor and a communication interface. The processor is configured to implement all processes of the prediction information obtaining method embodiment. The communication interface is configured to communicate with an external communication device. The network-side device embodiment corresponds to the second communication device side method embodiment, so that all implementation processes and implementations of the method embodiment are applicable to the network-side device embodiment, and can achieve the same technical effect.

Specifically, an embodiment of this application further provides a network-side device. As shown in FIG. 10, the network-side device 1000 includes: an antenna 1001, a radio frequency apparatus 1002, a baseband apparatus 1003, a processor 1004, and a memory 1005. The antenna 1001 is connected with the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes information to be sent, and sends same to the radio frequency apparatus 1002. The radio frequency apparatus 1002 processes the received information, and then sends same via the antenna 1001.

The method executed by the network-side device in the above embodiment may be implemented in the baseband apparatus 1003. The baseband apparatus 1003 includes a baseband processor.

The baseband apparatus 1003 may, for example, include at least one baseband board. The baseband board is provided with a plurality of chips. As shown in FIG. 10, one of the chips, for example the baseband processor, is connected with the memory 1005 via a bus interface to call a program in the memory 1005, so as to execute a network device operation shown in the method embodiment.

The network-side device may further include a network interface 1006. The interface is, for example, a common public radio interface (common public radio interface, CPRI).

Specifically, the network-side device 1000 of this embodiment of this application further includes an instruction or program stored in the memory 1005 and executable on the processor 1004. The processor 1004 calls the instruction or program in the memory 1005 to execute the method executed by all modules shown in FIG. 7, and achieves the same technical effect, and details of which are omitted here for brevity.

An embodiment of this application further provides a readable storage medium. The readable storage medium stores a program or instruction. The program or instruction, when being executed by a processor, implements all processes of the model construction method embodiment, or implements all processes of the prediction information obtaining method embodiment, and can achieve the same technical effect, and details of which are omitted here for brevity.

The processor is the processor in the terminal described in the above embodiment. The readable storage medium includes a computer-readable storage medium, for example, a read-only memory ROM, a random access memory RAM, a magnetic disk, an optical disk, or the like.

An embodiment of this application further provides a chip. The chip includes a processor and a communication interface. The communication interface is coupled to the processor. The processor is configured to run a program or instruction to implement all processes of the model construction method embodiment, or implement all processes of the prediction information obtaining method embodiment, and can achieve the same technical effect, and details of which are omitted here for brevity.

It is to be understood that the chip mentioned in the embodiment of this application may also be called as a system-level chip, a system chip, a chip system, or a system on chip.

An embodiment of this application further provides a computer program/program product. The computer program/program product is stored in a storage medium. The computer program/program product is executed by at least one processor to implement all processes of the model construction method embodiment, or implement all processes of the prediction information obtaining method embodiment, and can achieve the same technical effect, and details of which are omitted here for brevity.

An embodiment of this application further provides a model configuration system, including a first communication device and a second communication device. The first communication device may be configured to execute steps of the model construction method as described above. The second communication device may be configured to execute steps of the prediction information obtaining method as described above.

It is to be noted that, terms "include" and "comprise" or any other variant thereof is intended to cover nonexclusive inclusions herein, so that a process, method, object or apparatus including a series of components not only includes those components but also includes other components which are not clearly listed or further includes components intrinsic to the process, the method, the object or the apparatus. Under the condition of no more limitations, a component defined by the statement "including a/an....." does not exclude existence of the same other components in a process, method, object or apparatus including the component. In addition, it is to be noted that, the scope of the method and apparatus in the embodiments of this application is not limited to performing the functions in a shown or discussed order, and may also include performing the functions in a substantially simultaneous manner or in a reverse order according to the functions involved. For example, the method described may be executed in an order different from that described, and various steps may also be added, omitted, or combined. In addition, features described with reference to some examples may be combined in other examples.

From the above descriptions about the implementation modes, those skilled in the art may clearly know that the method of the foregoing embodiments may be implemented in a manner of combining software and a necessary universal hardware platform, and of course, may also be implemented through hardware, but the former is a preferred implementation mode under many circumstances. Based on such an understanding, the technical solutions of this application substantially or parts making contributions to the conventional art may be embodied in form of a computer software product, and the computer software product is stored in a storage medium (for example, a ROM/RAM), a magnetic disk and an optical disk), including a plurality of instructions configured to enable a terminal (which may be a mobile phone, a computer, a server, an air conditioner, a network device, or the like) to execute the method in each embodiment of this application.

The embodiments of this application are described above with reference to the accompanying drawings, but this application is not limited to the above specific embodiments, which are merely illustrative rather than restrictive. Under the inspiration of this application, those of ordinary skill in the art can also make many forms without departing from the scope of this application and the protection scope of the claims, which all fall within the protection of this application.

**Claims**

1. A model construction method, comprising:

   obtaining, by a first communication device, configuration information of a time series prediction model from a second communication device, wherein the time series prediction model is used for predicting information related to a time series; and

   constructing, by the first communication device, the time series prediction model based on the configuration information.

2. The method according to claim 1, wherein the configuration information comprises at least one of the following:

   first configuration information of a kernel function, wherein the first configuration information comprises: a quantity of the kernel functions, a hyper-parameter of the kernel function, and a type of the kernel function;

   a first task identifier, wherein the first task identifier is used for indicating a task associated with the first configuration information;

   optimizer selection information;

   model training configuration, wherein the model training configuration comprises at least one of the following: a length of a first training window, an input of model training, a label of model training, or a time interval for sampling in a first training window;

   model prediction configuration, wherein the model prediction configuration comprises at least one of the following: a length of a first prediction window, a prediction input, a prediction output, or a time interval for sampling in a first prediction window;

   a life cycle of the time series prediction model; or

   a computing mode of the time series prediction model, wherein the computing mode comprises: serial computing or parallel computing.

3.  The method according to claim 2, wherein the optimizer selection information comprises one of the following:

    a first configuration parameter of a gradient descent optimization algorithm, wherein the first configuration parameter comprises: an initial value, a step length, and an termination condition; and
    a second configuration parameter of a grid search optimization algorithm, wherein the second configuration parameter comprises: an upper bound of grid search with different hyper-parameters, a lower bound of grid search with different hyper-parameters, and a step length of grid search with different hyper-parameters.

4.  The method according to claim 2, wherein the prediction output comprises:

    label information corresponding to a time unit number of the prediction input; and
    prediction variance of an output of the time series prediction model and/or a prediction error of the output of the time series prediction model.

5.  The method according to claim 2, wherein the life cycle of the time series prediction model comprises: entry-into-force time, failure time, and run time.

6.  The method according to claim 1, wherein after the obtaining, by the first communication device, the configuration information of the time series prediction model from the second communication device, the method further comprises: sending, by the first communication device, feedback information to the second communication device, wherein the feedback information is used for indicating that the first communication device supports the configuration information, or the feedback information is used for indicating that the first communication device does not support the configuration information.

7.  The method according to claim 6, wherein the feedback information comprises at least one of the following:

    second indication information, wherein the second indication information is used for indicating a kernel function supported by the first communication device, and the kernel function indicated by the second indication information is one or more kernel functions configured in the configuration information;
    third indication information, wherein the third indication information is used for indicating that the first communication device has a requirement for task prediction, or the third indication information is used for indicating that the first communication device does not have the requirement for task prediction, and a task indicated by the third indication information is a task configured by the configuration information;
    fourth indication information, wherein the fourth indication information is used for indicating that the first communication device supports a target optimizer, or the fourth indication information is used for indicating that the first communication device does not support the target optimizer, and the target optimizer is an optimizer configured by the configuration information;
    fifth indication information, wherein the fifth indication information is used for indicating that the first communication device supports model training configuration in the configuration information, or the fifth indication information is used for indicating that the first communication device does not support the model training configuration in the configuration information; or
    sixth indication information, wherein the sixth indication information is used for indicating that the first communication device supports model prediction configuration in the configuration information, or the sixth indication information is used for indicating that the first communication device does not support the model prediction configuration in the configuration information.

8.  The method according to claim 2, wherein the kernel function is at least one kernel function in a kernel function list, wherein the first communication device and the second communication device are configured with the kernel function list in advance.

9.  The method according to claim 2, wherein the task identifier is at least one task identifier in a task list, wherein the first communication device and the second communication device are configured with the task list in advance.

10. The method according to claim 2, wherein the optimizer selection information comprises a target optimizer identifier, the target optimizer identifier is at least one optimizer identifier in an optimizer list, the optimizer list comprises a correspondence relationship between the optimizer identifier and parameter configuration, and the first communication device and the second communication device are configured with the optimizer list in advance.

**11.** The method according to claim 2, wherein the model training configuration further comprises:

a first processing mode for a training input, wherein the first processing mode comprises: linear scaling processing or non-linear scaling processing; and

a second processing mode for a label, wherein the second processing mode comprises: linear normalization processing or mean normalization processing.

**12.** The method according to claim 2, wherein computing mode configuration is determined by the first communication device according to computing power and storage capacity of the first communication device.

**13.** The method according to claim 1, wherein before the obtaining, by the first communication device, the configuration information of the time series prediction model from the second communication device, the method further comprises: recommending, by the first communication device, recommended configuration of the time series prediction model to the second communication device according to second information.

**14.** The method according to claim 13, wherein the recommended configuration comprises at least one of the following:

a recommended kernel function;
recommended model training configuration; or
recommended model prediction configuration.

**15.** The method according to claim 13, wherein the second information comprises at least one of the following:

to-be-predicted statistical information of first information;
an estimation error of the first information;
statistical information of the estimation error;
a model prediction error;
statistical information of the model prediction error;
mobility information of the first communication device;
statistical information of noise; or
performance requirement information, wherein the performance requirement information comprises at least one of the following: requirement information of prediction accuracy, requirement information of processing delay, or requirement information of computing delay.

**16.** The method according to any one of claims 1 to 15, wherein after the configuring, by the first communication device, the time series prediction model based on the configuration module, the method further comprises: reporting, by the first communication device, target prediction information to the second communication device, wherein the target prediction information is prediction information that is obtained by predicting the first information using the time series prediction model, and the first information is information related to the time series.

**17.** The method according to claim 16, wherein the target prediction information comprises at least one of the following:

the first information obtained through prediction;
a prediction error corresponding to the predicted first information;
a second task identifier;
configuration-related information of a second training window; or
configuration-related information of a second prediction window.

**18.** The method according to claim 17, wherein the configuration-related information of the second training window comprises at least one of the following:

a length of the second training window;
an input of model training; or
first time stamp information, wherein the first time stamp information comprises at least one of the following: a number of the second training window, start time of the second training window, end time of the second training window, or a time interval for sampling in a second training window.

**19.** The method according to claim 17, wherein the configuration-related information of the second prediction window comprises at least one of the following:

a length of the second prediction window;
an input of model prediction; or
second time stamp information, wherein the second time stamp information comprises at least one of the following: a number of the second prediction window, start time of the second prediction window, end time of the second prediction window, or a time interval for sampling in a second prediction window.

20. The method according to any one of claims 1 to 15, wherein before the obtaining, by the first communication device, the configuration information of the time series prediction model from the second communication device, the method further comprises:
sending, by the first communication device, model configuration request information to the second communication device.

21. The method according to claim 1, wherein the configuration information comprises at least one of the following:

structural information of the time series prediction model;
a weight value of the time series prediction model;
configuration of the time series prediction model, wherein the configuration comprises at least one of the following: an optimizer or a loss function; or
state information of the optimizer of the time series prediction model.

22. The method according to any one of claims 1 to 15, wherein the obtaining, by the first communication device, the configuration information of the time series prediction model from the second communication device comprises one of the following:

receiving, by the first communication device, the configuration information configured non-periodically by the second communication device;
receiving, by the first communication device, the configuration information configured periodically by the second communication device;
agreeing, by the first communication device, on the configuration information with the second communication device; and
determining, by the first communication device, the configuration information, reporting the configuration information to the second communication device, and after receiving confirmation information of the second communication device, obtaining the configuration information.

23. A prediction information obtaining method, comprising:

configuring, by a second communication device, configuration information of a time series prediction model for a first communication device, wherein the time series prediction model is used for predicting information related to a time series; and
receiving, by the second communication device, target prediction information reported by the first communication device, wherein the target prediction information is prediction information that is obtained by the first communication device using the time series prediction model to predict first information.

24. The method according to claim 23, wherein the configuration information comprises at least one of the following:

first configuration information of a kernel function, wherein the first configuration information comprises: a quantity of the kernel functions, a hyper-parameter of the kernel function, and a type of the kernel function;
a task identifier, wherein the task identifier is used for indicating a task associated with the first configuration information;
optimizer selection information;
model training configuration, wherein the model training configuration comprises at least one of the following: a length of a first training window, an input of model training, a label of model training, or a time interval for sampling in a first training window;
model prediction configuration, wherein the model prediction configuration comprises at least one of the following: a length of a prediction window, a prediction input, a prediction output, or a time interval for sampling in a prediction window;

a life cycle of the time series prediction model; or
computing mode configuration of the time series prediction model, wherein the computing mode configuration comprises: serial computing or parallel computing.

25. The method according to claim 23, wherein after the configuring, by the second communication device, the configuration information of the time series prediction model for the first communication device, the method further comprises:

receiving, by the second communication device, feedback information sent by the first communication device, wherein the feedback information is used for indicating that the first communication device supports the configuration information, or the feedback information is used for indicating that the first communication device does not support the configuration information.

26. The method according to claim 25, wherein the feedback information comprises at least one of the following:

second indication information, wherein the second indication information is used for indicating a kernel function supported by the first communication device, and the kernel function indicated by the second indication information is one or more kernel functions configured in the configuration information;
third indication information, wherein the third indication information is used for indicating that the first communication device has a requirement for task prediction, or the third indication information is used for indicating that the first communication device does not have the requirement for task prediction, and a task indicated by the third indication information is a task configured by the configuration information;
fourth indication information, wherein the fourth indication information is used for indicating that the first communication device supports a target optimizer, or the fourth indication information is used for indicating that the first communication device does not support the target optimizer, and the target optimizer is an optimizer configured by the configuration information;
fifth indication information, wherein the fifth indication information is used for indicating that the first communication device supports model training configuration in the configuration information, or the fifth indication information is used for indicating that the first communication device does not support the model training configuration in the configuration information; or
sixth indication information, wherein the sixth indication information is used for indicating that the first communication device supports model prediction configuration in the configuration information, or the sixth indication information is used for indicating that the first communication device does not support the model prediction configuration in the configuration information.

27. The method according to claim 23, wherein before the configuring, by the second communication device, the configuration information of the time series prediction model for the first communication device, the method further comprises:
receiving, by the second communication device, recommended configuration of the time series prediction model that is sent by the first communication device.

28. The method according to claim 27, wherein the recommended configuration comprises at least one of the following:

a recommended kernel function;
recommended model training configuration; or
recommended model prediction configuration.

29. The method according to claim 23, wherein the second communication device configuring the configuration information of the time series prediction model for the first communication device comprises:

receiving, by the second communication device, second information reported by the first communication device; and
configuring the configuration information of the time series prediction model for the first communication device based on the second information, wherein
the second information comprises at least one of the following:

statistical information of first information;
an estimation error of the first information;
statistical information of the estimation error;

a model prediction error;
statistical information of the model prediction error;
mobility information of the first communication device;
statistical information of noise; or
performance requirement information, wherein the performance requirement information comprises at least one of the following: requirement information of prediction accuracy, requirement information of processing delay, or requirement information of computing delay.

30. The method according to any one of claims 23 to 29, wherein the target prediction information comprises at least one of the following:

the first information obtained through prediction;
a prediction error corresponding to the predicted first information;
a task identifier;
information related to configuration of a second training window; or
information related to a second prediction window.

31. The method according to claim 30, wherein the information related to the configuration of the second training window comprises at least one of the following:

a length of the second training window;
an input of model training; or
first time stamp information, wherein the first time stamp information comprises at least one of the following: a number of the second training window, start time of the second training window, end time of the second training window, or a time interval for sampling in a second training window.

32. The method according to claim 30, wherein the information related to the second prediction window comprises at least one of the following:

a length of the second prediction window;
an input of model prediction; or
second time stamp information, wherein the second time stamp information comprises at least one of the following: a number of the second prediction window, start time of the second prediction window, end time of the second prediction window, or a time interval for sampling in a second prediction window.

33. The method according to any one of claims 23 to 32, wherein before the configuring, by the second communication device, the configuration information of the time series prediction model for the first communication device, the method further comprises:
receiving model configuration request information sent by the first communication device.

34. The method according to claim 23, wherein the configuration information comprises at least one of the following:

structural information of the time series prediction model;
a weight value of the time series prediction model;
configuration of the time series prediction model, wherein the configuration comprises at least one of the following: an optimizer or a loss function; or
state information of the optimizer of the time series prediction model.

35. The method according to any one of claims 23 to 34, wherein the configuring, by the second communication device, the configuration information of the time series prediction model for the first communication device comprises one of the following:

non-periodically configuring, by the second communication device, the configuration information of the time series prediction model for the first communication device;
periodically configuring, by the second communication device, the configuration information of the time series prediction model for the first communication device;
agreeing, by the second communication device, on the configuration information with the first communication device; and

reporting, by the second communication device, the configuration information, and sending confirmation information to the first communication device.

36. A model construction apparatus, comprising:

an obtaining module, which is configured to obtain configuration information of a time series prediction model from a second communication device, wherein the time series prediction model is used for predicting information related to a time series; and
an application module, which is configured to construct the time series prediction model based on the configuration information.

37. A prediction information obtaining apparatus, comprising:

a configuration module, which is configured to configure configuration information of a time series prediction model for a first communication device, wherein the time series prediction model is used for predicting first information, and the first information is information related to a time series; and
a receiving module, which is configured to receive target prediction information reported by the first communication device, wherein the target prediction information is prediction information that is obtained by the first communication device using the time series prediction model to predict the first information.

38. A communication device, comprising a processor and a memory, wherein the memory stores a program or instruction executable on the processor, and the program or instruction, when being executed by the processor, implements steps of the method according to any one of claims 1 to 35.

39. A readable storage medium, wherein the readable storage medium stores a program or instruction, and the program or instruction, when being executed by a processor, implements steps of the method according to any one of claims 1 to 35.

Terminal

## FIG. 1

200

S210

A first communication device obtains configuration information of a time series prediction model from a second communication device. The time series prediction model is used for predicting information related to a time series

S212

The first communication device constructs the time series prediction model based on the configuration information

## FIG. 2

300

S310

A second communication device configures configuration information of a time series prediction model for a first communication device; and the time series prediction model is used for predicting information related to a time series

S312

The second communication device receives target prediction information reported by the first communication device; and the target prediction information is prediction information that is obtained by the first communication device using the time series prediction model to predict first information

FIG. 3

400

| Terminal | | Network-side device |

S401

S402

S403

FIG. 4

Frequency domain (SC)

Timeslot number 1   Timeslot number 2   Timeslot number 3   Timeslot number 4   Timeslot number 5   Timeslot number 6   Timeslot number 7

Time domain (timeslot)

FIG. 5

600

Obtaining module — 601

Application module — 602

FIG. 6

700

Configuration module — 701

Receiving module — 702

FIG. 7

Communication device — 800

801 — Processor ⟷ Memory — 802

FIG. 8

900

901 — Radio frequency unit

910

909 — Memory
- Application program
- Operating system

908 — Interface unit

907 — User input unit
- 9071 — Touch panel
- 9072 — Other input device

Processor

Network module — 902

Audio output unit — 903

904 — Input unit
- Graphics processing unit — 9041
- Microphone — 9042

906 — Display unit
- Display panel — 9061

Sensor — 905

FIG. 9

1000 — Network-side device

1001

1004 — Processor

1005 — Memory

Bus interface

Radio frequency apparatus — 1002

Baseband apparatus — 1003

Network interface

1006

FIG. 10

## INTERNATIONAL SEARCH REPORT

International application No.

**PCT/CN2022/143672**

### A. CLASSIFICATION OF SUBJECT MATTER

G06F 30/27(2020.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, VEN, USTXT, WOTXT, EPTXT, CNTXT, IEEE, ISI, CNKI, 3GPP: 预测, 模型, 配置, 时间, 序列, 通信, 核函数, 优化, predict, model, configuration, time, sequence, communication, kernel, optimize

### C. DOCUMENTS CONSIDERED TO BE RELEVANT

| Category* | Citation of document, with indication, where appropriate, of the relevant passages | Relevant to claim No. |
|---|---|---|
| X | US 2016034823 A1 (COLLISION COMMUNICATIONS, INC.) 04 February 2016 (2016-02-04) description, paragraphs [0004]-[0053] | 1-39 |
| A | WO 2018202297 A1 (HUAWEI TECHNOLOGIES CO., LTD. et al.) 08 November 2018 (2018-11-08) entire document | 1-39 |
| A | CN 110543973 A (ALIBABA GROUP HOLDING LIMITED) 06 December 2019 (2019-12-06) entire document | 1-39 |
| A | CN 105744625 A (SONY CORPORATION) 06 July 2016 (2016-07-06) entire document | 1-39 |
| A | CN 113268403 A (CHINA UNITED NETWORK COMMUNICATIONS GROUP CO., LTD.) 17 August 2021 (2021-08-17) entire document | 1-39 |
| A | CN 113660676 A (SHANDONG NORMAL UNIVERSITY) 16 November 2021 (2021-11-16) entire document | 1-39 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 March 2023** | **22 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

# EP 4 459 498 A1

## INTERNATIONAL SEARCH REPORT
### Information on patent family members

International application No.

**PCT/CN2022/143672**

| Patent document cited in search report | | | Publication date (day/month/year) | Patent family member(s) | | | Publication date (day/month/year) |
|---|---|---|---|---|---|---|---|
| US | 2016034823 | A1 | 04 February 2016 | US | 2018249345 | A1 | 30 August 2018 |
| | | | | US | 11096063 | B2 | 17 August 2021 |
| | | | | US | 2021377745 | A1 | 02 December 2021 |
| | | | | US | 9961560 | B2 | 01 May 2018 |
| WO | 2018202297 | A1 | 08 November 2018 | | None | | |
| CN | 110543973 | A | 06 December 2019 | | None | | |
| CN | 105744625 | A | 06 July 2016 | WO | 2016091077 | A1 | 16 June 2016 |
| | | | | US | 2017367027 | A1 | 21 December 2017 |
| | | | | US | 10334500 | B2 | 25 June 2019 |
| | | | | KR | 20170094247 | A | 17 August 2017 |
| | | | | US | 2020305058 | A1 | 24 September 2020 |
| | | | | US | 11026152 | B2 | 01 June 2021 |
| | | | | US | 2019274083 | A1 | 05 September 2019 |
| | | | | US | 10721671 | B2 | 21 July 2020 |
| | | | | US | 2021250840 | A1 | 12 August 2021 |
| CN | 113268403 | A | 17 August 2021 | | None | | |
| CN | 113660676 | A | 16 November 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111662864